# FASCICULE DE BREVET EUROPEEN

(11) **EP 0 480 826 B1**
(45) Date de publication et mention de la délivrance du brevet: **18.01.1995**
(21) Numéro de dépôt: 91402691.9
(22) Date de dépôt: 09.10.1991
(51) Int. Cl.: H04M 3/24

(54) **Equipement de test à distance du protocole sur l'interface S et T d'un équipement terminal RNIS**
Fernprüfungsanordnung eines Protokolls über den Schnittstellen S und T eines ISDN-Endgeräts
Remote protocol test equipment, on the S and T interface of a ISDN terminal equipement

(30) Priorité: 10.10.1990 FR 9012502
(43) Date de publication de la demande: 15.04.1992
(73) Titulaire: FRANCE TELECOM, 75015 Paris (FR)
(72) Inventeur: Morvan, Michel, F-22560 Pleumeur Bodou (FR); Le Stanc, François, F-22300 Lannion (FR)
(74) Mandataire: Martinet & Lapoux

(56) Documents cités:
- EP-A- 0 044 098
- DE-A- 3 808 829
- US-A- 4 884 269
- IBM TECHNICAL DISCLOSURE BULLETIN vol. 26, no. 7A, Décembre 1983,NEW YORK, US; pages 3258 - 3259; G.EPENOY ET AL.: 'DATA MULTIPLEXING IN MODEMS'

## Description

La présente invention concerne, un équipement bidirectionnel destiné notamment à permettre de tester à distance, à travers tout réseau de transport de données, un équipement terminal de données RNIS par un testeur numérique.

En pratique, comme on le verra plus loin dans la description d'une réalisation préférée de l'invention, l'équipement terminal à tester est accessible par une interface normalisée, et le testeur teste le protocole du canal de signalisation D d'une ligne multiplex standard 2B + D, où B désigne un canal de données à 64 kbit/s. L'interface S est de préférence du premier type S0 par lequel l'accès de base de réseau numérique à intégration de services RNIS comprend deux canaux de données en mode circuit à 64 kbit/s et un canal D en mode paquet à 16 kbit/s, et non de second type pour lequel l'accès de base comprend trente canaux B à 64 kbit/s et un canal D à 64 kbits/s multiplexés dans une ligne multiplex à 2048 kbit/s. En effet l'accès de base de premier type est susceptible selon l'invention d'être adapté à tout type de réseau de transport actuel non limité à un débit minimal de 64 kbit/s.

Par réseau de transport de données au sens de l'invention est désigné un réseau de transmission de données, numérique ou analogique, capable de transmettre d'une manière totalement transparente, des données entre deux accès quelconques à ce réseau.

Dans une communication établie à partir d'un équipement terminal de données vers un réseau RNIS, la signalisation convoyée par le canal D pour les protocoles de niveaux 2 et 3, c'est-à-dire de liaison et commande réseau, a une portée limitée au premier noeud du réseau RNIS à partir de la ligne de raccordement de l'équipement terminal. Pour tester cet équipement terminal, un testeur adéquat doit donc être relié localement ou à proximité, à travers la ligne de raccordement, à l'équipement terminal, ce qui impose au service d'agrément possédant le testeur à se déplacer chaque fois qu'un équipement est à tester.

La présente invention vise à tester à distance un équipement terminal RNIS à travers tout réseau de transport de données, et plus particulièrement à fournir un équipement adaptant le débit du canal de signalisation d'un accès de base RNIS au débit d'un accès classique d'un réseau de transport afin que les messages du protocole testé relatif au canal de signalisation traversent d'une manière transparente le réseau de transport.

A cette fin, un équipement bidirectionnel interconnectant une ligne numérique multiplex bidirectionnelle convoyant au moins un canal de données et un canal de signalisation et une ligne numérique bidirectionnelle de trames de données synchrones ayant un débit prédéterminé différent du débit du canal de signalisation, comprenant :
- des premiers moyens pour extraire un canal de signalisation entrant par la ligne multiplex,
- des premiers moyens d'adaptation de débit pour changer un débit de bits du canal de signalisation entrant en ledit débit de la ligne de données, et
- des seconds moyens d'adaptation de débit pour changer le débit des bits dans les trames entrantes en ledit débit du canal de signalisation.

Un tel équipement est déjà connu du document US-A-4 884 296.

De plus l'équipement selon l'invention est caractérisé en ce que les premiers moyens pour extraire extraient des bits utiles prédéterminés du canal de signalisation extrait, et en ce que l'équipement comprend, en outre,
- des premiers moyens pour insérer les bits utiles du canal de signalisation transmis par les premiers moyens d'adaptation, dans le champ d'information de trames sortantes dans la ligne de données,
- des seconds moyens recevant des trames entrantes par la ligne de données pour extraire de leur champ d'information, les bits utiles au débit de la ligne de données à destination du canal de signalisation sortant de la ligne multiplex, et
- des seconds moyens pour insérer les bits utiles transmis par les seconds moyens d'adaptation, dans des trames transmises dans le canal de signalisation sortant de la ligne multiplex.

En pratique, pour un canal de signalisation standard D, les premiers moyens pour extraire et les seconds moyens pour insérer démultiplexent/multiplexent le canal D et les canaux de données B, et extraient/insèrent les bits utiles de signalisation du protocole D dans les champs d'adresse et de commande des messages, dits également trames, convoyés par le canal D. Lesdits bits utiles, après/avant un changement de débit, sont insérés dans/extraits des trames HDLC de la ligne de données faisant office d'accès normalisé à un réseau de transport de données.

Selon une réalisation préférée, les premiers, respectivement seconds moyens d'adaptation de débit comprennent :
- une mémoire tampon mémorisant des bits utiles extraits du canal de signalisation entrant, respectivement extraits du champ d'information des trames entrantes de la ligne de données;
- des moyens pour lire les bits utiles extraits dans les premiers, respectivement seconds moyens pour extraire et les écrire dans la mémoire tampon à un rythme dépendant du débit du canal de signalisation, respectivement de la ligne de données, en réponse à un signal de détection de bit produit par les premiers, respectivement seconds moyens pour extraire, et
- des moyens pour lire les bits utiles dans la mémoire tampon et les écrire dans les premiers, respectivement seconds moyens pour insérer à un rythme dépendant du débit de la ligne de données, respectivement du canal de signalisation, en réponse à un signal de disponibilité de transmission produit par les premiers, respectivement seconds moyens pour insérer.

Comme on le verra dans la suite, un équipement de test selon l'invention peut tester un équipement terminal de type équipement terminal de traitements de données, ou un équipement terminal de type équipement de terminaison de circuit de données.

D'autres avantages et caractéristiques de l'invention apparaîtront plus clairement à la lecture de la description suivante de plusieurs réalisations préférées de l'invention en référence aux dessins annexés correspondants dans lesquels :
- la Fig.1 est un bloc-diagramme schématique d'un équipement bidirectionnel de test à distance selon l'invention ;
- la Fig.2 est un bloc-diagramme détaillé de moyens d'adaptation de débit inclus dans l'équipement de test;
- la Fig.3 est un bloc-diagramme schématique d'une liaison entre un équipement terminal à tester de type ETTD et un testeur au moyen d'équipements selon l'invention, deux variantes de connexion du testeur à une console d'exploitation étant également illustré; et
- la Fig.4 est un bloc-diagramme analogue à la Fig.3 relatif à un équipement terminal à tester de type ETCD.

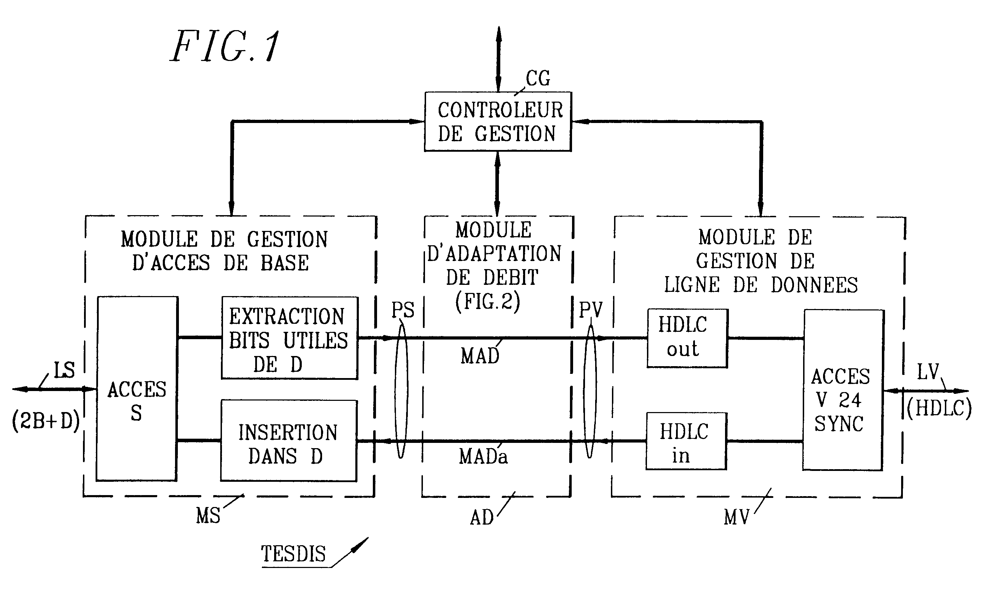

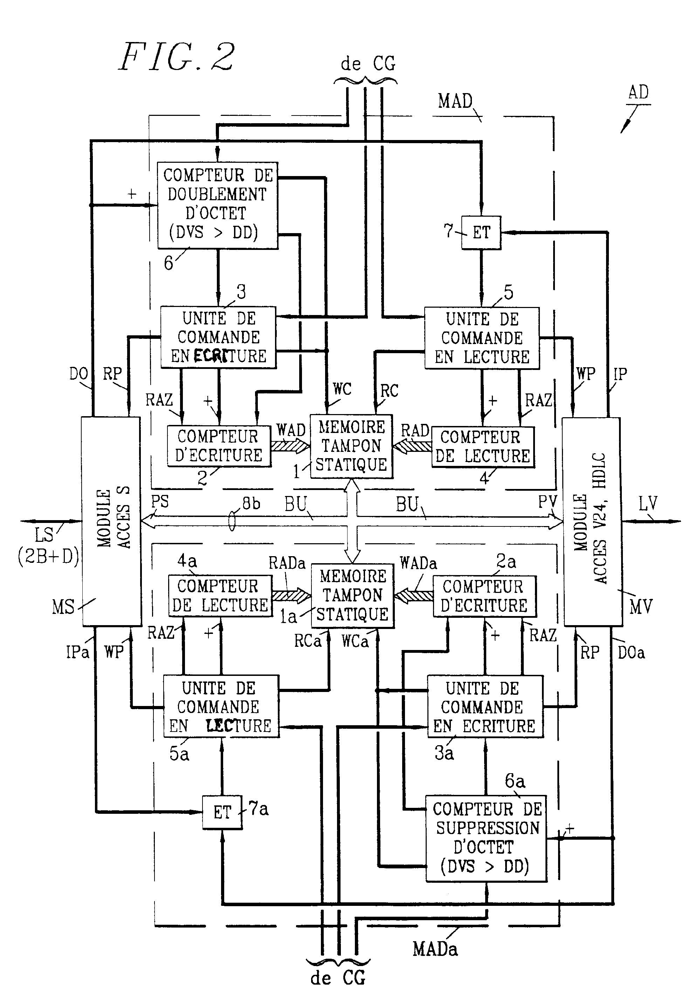

En référence à la Fig.1 un équipement de test à distance TESDIS selon l'invention comprend principalement :
- un module de gestion d'accès de base MS relié à une ligne numérique multiplex bidirectionnelle de base LS convoyant deux canaux de données B à 64 kbit/s commutés en mode-circuit et un canal de signalisation D à 16 kbit/s, ce dernier étant susceptible de supporter des données à bas débit en mode-paquet.
- un module de gestion de ligne de données MV relié à une ligne numérique bidirectionnelle de données classique LV de type HDLC, ayant un débit de quelques kbit/s, pour convoyer des bits utiles de signalisation supportés par le canal D;
- un circuit d'adaptation de débit AD interconnectant bidirectionnellement les modules MS et MV et adaptant les débits différents du canal D et de la liaison LV, et
- un contrôleur de gestion CG à microprocesseur commandant les modules MS et MV et le circuit d'adaptation AD.

Le module de gestion d'accès de base MS gère le niveau physique 1 de l'interface S (plus précisément S0) selon la recommandation Q.920 du CCITT (Comité Consultatif International Télégraphique et Téléphonique), Fascicule VI.10, pages 3 à 18. Comme on le verra dans la suite, le module MS est programmé pour jouer le rôle d'un équipement de terminaison de circuit de données (ETCD) lorsque la ligne de base LS dessert un équipement terminal d'usager TLa à tester ou un testeur TTb équivalent à un équipement terminal de traitement de données (ETTD); selon une seconde variante, le module MS est programmé pour jouer le rôle d'un ETTD lorsque la liaison de base LS dessert un équipement terminal d'usager TLb à tester ou un testeur TTa équivalent à un ETCD.

Dans un souci de simplification de la terminologie, un "équipement terminal d'usager à tester" est désigné dans la suite par "terminal".

La ligne de base LS est composée par exemple d'un bus passif ayant un débit utile de (2 x 64) + 16 = 144 kbits/s et un débit en ligne de 192 kbit/s.

Le module MS relativement au niveau 1 de l'interface S assure ou reçoit la téléalimentation, et participe à l'activation et la désactivation de la procédure du niveau 1 et à la composition de la trame dans l'interface S.

Le module MS offre, au niveau liaison 2 de l'interface S, une fonction HDLC (High Level Data Link Control : commande de liaison de données à haut niveau) sur le canal de signalisation D. En particulier, dans le module MS sont prévus des moyens de démultiplexage pour extraire les bits du canal D dans la ligne multiplex LS et ne présenter que les bits utiles dans les champs d'adresse à 2 octets et de commande à 4 octets des trames de canal D à un port d'accès PS d'un bus à 8 bits du circuit d'adaptation de débit AD, des moyens de multiplexage pour insérer des bits utiles de signalisation provenant de la ligne de données LV via le port PS dans les trames à 48 bits de l'interface S à partir des deux octets de la séquence de contrôle de trame FCS du canal D, et d'autres moyens classiques relatifs à des caractéristiques de la trame de l'interface S, telles que vérification et calcul de la redondance cyclique CRC, extraction et formation des bits de verrouillage de trame, etc.

Il est à noter que, selon l'invention, les canaux de données B1 et B2 sont pratiquement non utilisés, et sont alors forcés de transmettre des paires de bits alternés "01....01".

Le module de gestion d'accès de base MS peut être realisé par exemple à partir de composants inclus dans le module ISAC 2085 de SIEMENS, ou 29C53 d'INTEL.

L'autre module MV de l'équipement TESDIS est conçu selon la recommandation V.24 du CCITT, Fascicule VIII.I, pages 104 à 121. Ce module joue toujours le rôle d'un équipement terminal et de traitement de données (ETTD) au niveau 1 de l'interface V.24.

Le module MV comprend essentiellement des moyens d'émission et de réception de données conformes aux circuits 103 et 104 de la recommandation V.24. Ainsi sont prévus des moyens "HDLC out" recevant les bits utiles de signalisation extraits du canal entrant D par un port d'accès PV du circuit d'adaptation de débit AD pour les insérer dans le champ d'information des trames synchrones sortantes HDLC au débit de la ligne LV, des moyens "HDLC in" recevant des trames synchrones entrantes HDLC de la ligne LV pour extraire de leur champ d'information des bits utiles de signalisation à destination du canal sortant D dans la ligne LS, via le port PS, et des moyens "sync" interconnectant les deux moyens précédents à la liaison pour assurer les fonctions classiques d'adaptation électriques, de transcodage et de synchronisation. En ce qui concerne la synchronisation, le module MV étant du type ETTD, celui-ci récupère des signaux d'horloge à partir des signaux de données reçus via la ligne LV.

Le module de gestion de jonction de données MV assure encore notamment des fonctions attribuées aux circuits 107,108 et 125 selon la recommandation V.24. Ces fonctions se rapportent à la gestion d'une communication HDLC selon la recommandation V.25 bis, comprenant la vérification de l'état de fonctionnement du module, les connexion/déconnexion du module MV à la ligne LV, la procédure d'appel automatique, etc... Comme on le verra dans la suite, le module MV peut être relié à des modems ou des adaptateurs de terminaux d'un réseau de transport de communication; dans ce cas, le changement d'état du circuit 107 indique que la synchronisation des modems ou adaptateurs au réseau de transport est réalisée.

Il est à noter que le débit en ligne DV dans la ligne de données LV est l'un des débits normalisés 1,2 kbit/s, 2,4 kbit/s, 4,8 kbit/s, 9,6 kbit/s et 19,2 kbit/s qui est sélectionné en fonction du réseau de transport. Le débit sélectionné est programmé dans l'équipement TESDIS, via le contrôleur de gestion CG, lors de l'installation de l'équipement.

Le module de gestion de ligne de données peut être en pratique réalisé à partir de composants dans le module V24 synchrone 8274 d'INTEL, ou Z 35C30 de ZILOG.

Le contrôleur de gestion CG initialise, mémorise, traite et interrompt des évènements et des commandes dans les procédures du protocole D dans le premier module MS et dans le protocole HDLC/V24 dans le module MV afin de les rendre compatibles. Principalement, les fonctions du contrôleur CG sont les suivantes :
- dialogues avec d'autres circuits externes, tels que périphériques, ou dispositif d'établissement de statistique ou de détection d'anomalies,
- programmation et gestion des configurations des modules MS et MV en dépendance notamment du type de test, et l'utilisation des canaux B, et du débit de la ligne LV,
- correspondance entre des ordres d'échange de signaux entre les modules MS et MV par l'intermédiaire de tables, et plus précisément, entre les débuts et fins de trame du canal D et du champ d'information de trame de la ligne LV de type V.24,
- synchronisation des connexion et déconnexion entre les interfaces S et V24 à travers les modules MS et MV.

Le circuit d'adaptation de débit AD adapte le débit binaire DD=16 kbit/s du canal D au débit binaire DV de la ligne de données LV qui est soit un débit DVI égal à 1,2 kbit/s, 2,4 kbit/s, 4,8 kbit/s ou 9,6 kbit/s et inférieur au débit DD, soit un débit DVS égal à 19,2 kbit/s et supérieur au débit DD.

La structure du circuit AD est symétrique par rapport à un bus de données central distribué BU reliant les ports d'accès PS et PV aux modules MS et MV, comme montré à la Fig.2. En d'autres termes, dans le circuit AD, sont prévus des premiers moyens d'adaptation de débit MAD montrés au dessus du bus BU dans la Fig.2, recevant les bits utiles extraits du canal D par le port PS au débit DD pour les retransmettre au débit DV vers le port PV, qui sont symétriques de seconds moyens d'adaptation de débit MADa montrés en dessous du bus BU dans la Fig.2, recevant les bits utiles de signalisation de la ligne LV au débit DVI ou DVS par le port PV pour les retransmettre au débit DD vers le port PS et donc, dans le module MS, les insérer dans le canal sortant D de la ligne LS.

On décrit ci-après en détail les circuits composant les premiers moyens d'adaptation de débit MAD suivant la direction du module MS vers le module MV, les circuits composant les seconds moyens d'adaptation de débit MADa étant désignés dans la Fig.2 par les mêmes repères numériques que ceux équivalents dans les premiers moyens, respectivement, et accompagnés de la lettre a.

Les premiers moyens d'adaptation de débit MAD sont organisés autour d'une mémoire tampon d'octets 1 du type RAM statique qui reçoit les octets du canal extrait D au débit DD par le port PS et le bus BU, et qui les retransmet au débit DVI ou DVS par le bus BU et le port PV. A la mémoire 1 sont reliés un compteur cyclique d'adresse d'écriture 2, une unité logique de commande en écriture de mémoire 3, un compteur cyclique d'adresse de lecture 4, et une unité logique de commande en lecture de mémoire 5 respectivement via un bus d'adresse d'écriture WAD, un fil de commande d'écriture WC, un bus d'adresse de lecture RAD, et un fil de commande de lecture RC, respectivement.

Le fonctionnement des premiers moyens d'adaptation de débit MAD lorsque le débit sélectionné de la ligne de données LV est un débit DVS inférieur au débit DD, est le suivant.

Les unités de commande 3 et 5 sont respectivement reliées à des entrées RAZ des compteurs 2 et 4 pour remettre à zéro ceux-ci, soit lors de l'initialisation de l'équipement TESDIS après son installation, soit en réponse à un fanion de fermeture de trame respectivement dans le canal extrait D signalé par le module MS et dans la ligne LV signalé par le module MV, sous la commande du contrôleur de gestion CG. Les unités logiques 3 et 5 sont également asservies en permanence par le contrôleur de gestion CG afin d'éviter tout conflit entre réception-écriture et lecture-transmission d'octet au niveau de l'accès du bus de données BU par la mémoire 1, mais également tout conflit d'accès au bus BU entre la mémoire 1, et l'autre mémoire RAM 1a incluse dans les seconds moyens d'adaptation de débit. En outre, le contrôleur de gestion assure l'activation des unités 3 et 5 et des unités 3a et 5a respectivement pendant les trames de canal D et les trames de la ligne LV, et donc ces unités sont inactives au cours de la réception de fanions par les modules MS et MV respectivement.

A chaque octet utile, c'est-à-dire à chaque octet du champ d'adresse, de commande ou éventuellement d'information dans les trames du canal extrait D, les moyens d'extraction dans le module de gestion d'accès de base MS appliquent une impulsion de détection d'octet DO à l'unité 3 via un moyen de doublement d'octet 6 qui est inopérant pour un débit sélectionné DVI. En réponse à l'impulsion de détection d'octet DO, l'unité 3 incrémente d'une unité le compteur 2, produit une impulsion de lecture RP vers le module MS et déclenche un temporisateur inclus dans l'unité 3. L'octet à écrire en mémoire tampon 1 n'étant pas immédiatement présent dans le bus BU, le temporisateur, par exemple du type à registre à décalage ou à bascule monostable, est réglé afin d'imposer un retard prédéterminé entre l'impulsion de lecture RP et une impulsion de commande d'écriture appliquée par l'unité 3 à l'entrée WC de la mémoire 1. L'octet détecté est ainsi écrit à l'adresse délivrée par le compteur 2 incrémenté via le bus WAD. Les impulsions DO relatifs à des octets successifs étant transmises au débit DD/8, les bits utiles du canal D sont bien écrits au débit DD.

Dans les moyens d'adaptation de débit MAD est également prévu un circuit logique ET ayant une entrée recevant les impulsions de détection d'octet DO du module MS et une seconde entrée recevant des impulsions IP "prêt à transmettre" à l'état logique haut des moyens de retransmission "HDLC out" dans le module MV, en correspondance avec les fonctions des circuits 103 et 108 de la recommandation V.24. Le circuit 7 est à l'état ouvert pendant la durée d'un octet utile transmis par le canal D, soit pendant 0,5 ms. La sortie du circuit 7 applique les impulsions IP à la cadence de DVI/8 à l'unité de commande en lecture 5 tant que le module MV est capable de transmettre des données, notamment tant que la longueur maximum du champ d'information de trame V.24 n'est pas atteinte.
Suite à une impulsion IP, l'unité 5 incrémente le compteur de lecture 4, produit une impulsion de commande de lecture vers l'entrée RC de la mémoire tampon 1 et déclenche un temporisateur inclus dans l'unité 3. Puis le temporisateur applique une impulsion de lecture WP aux moyens "HDLC out" du module MV afin qu'un octet lu dans la mémoire 1 et non immédiatement présent dans le bus BU en réponse à une impulsion de commande de lecture soit traité par le module MV, et transmis dans la ligne LV.

La taille des mémoires RAM 1, 10, des compteurs d'écriture 2, 2a, et des compteurs de lecture 4, 4a, est de préférence choisie en dépendance des retards que peuvent subir les octets lors du changement de débit, soit un retard maximum de l'ordre de (262 x 8)/ 1 200 = 1,75 ms pour des trames de 262 octets au débit minimal de 1,2 kbit/s dans la ligne LV.

Lorsque le débit sélectionné dans la ligne LV est le débit DVS=19,2 kbit/s supérieur au débit DD=16 kbit/s, les premiers moyens d'adaptation de débit MAD introduisent un octet de remplissage dans le champ d'information de la trame de la ligne LV tous les cinq octets utiles consécutifs transmis par le port PS du module MS, en déduction du rapport de débit 19,6/16=( 6 x 8)/(5 x 8). Un octet de remplissage peut être une copie du dernier octet du groupe de cinq octets consécutifs ou un octet prédéterminé susceptible de ne pas se retrouver dans les octets d'information. Ce remplissage évite tout risque de coupure de transmission synchrone dans la ligne LV tout en ne nécéssitant qu'une écriture de cinq octets en mémoire tampon, et donc un retard de (5 x 8)/16=2,5 ms.

Selon la réalisation illustrée à la Fig.2, la première variante est envisagée par l'intermédiaire d'un moyen de doublement d'octet 6 inclus dans les premiers moyens d'adaptation de débit MAD. Le moyen de doublement consiste en un compteur modulo-5 qui est débloqué par le contrôleur de gestion CG lorsque le débit DVS est sélectionné, et qui compte les impulsions de détection d'octet d'information DO produites par le module MS. En réponse à chaque impulsion DO, le compteur 6 retransmet les impulsions DO à l'unité de commande en écriture 3 pour écrire un groupe de cinq octets consécutifs de canal D dans la mémoire 1. En réponse à la dernière de cinq impulsions successives DO, le compteur 6 retransmet l'impulsion DO, toujours à la cadence DD/8, pour écrire le cinquième octet du groupe. Puis immédiatement après cette écriture en mémoire, et bien avant la prochaine impulsion DO, le compteur 6 incrémente directement le compteur d'écriture 2 et applique une impulsion de commande d'écriture supplémentaire à l'entrée WC de la mémoire 1. Le cinquième octet est alors écrit à nouveau dans la mémoire 1, et est donc lu successivement deux fois au rythme DVS/8 par l'unité 5.

D'une manière réciproque les seconds moyens d'adaptation de débit MADa comprennent un compteur de suppression d'octet 6a qui reçoit des impulsions DOa du module MV afin de ne pas écrire un sixième octet d'information constituant un octet de remplissage, par blocage momentané de l'unité de commande en écriture 3a, le compteur 6a n'appliquant que des groupes de cinq impulsions DOa espacés d'un intervalle de temps sans impulsion DOa ayant une durée 8/DVS. Le module MS retransmet au fur et à mesure dans le canal D les bits d'information reçus par le module MV, et lorsque le module MV ne reçoit que des fanions de la ligne LV, le module MS remplit le canal sortant D avec des bits "1".

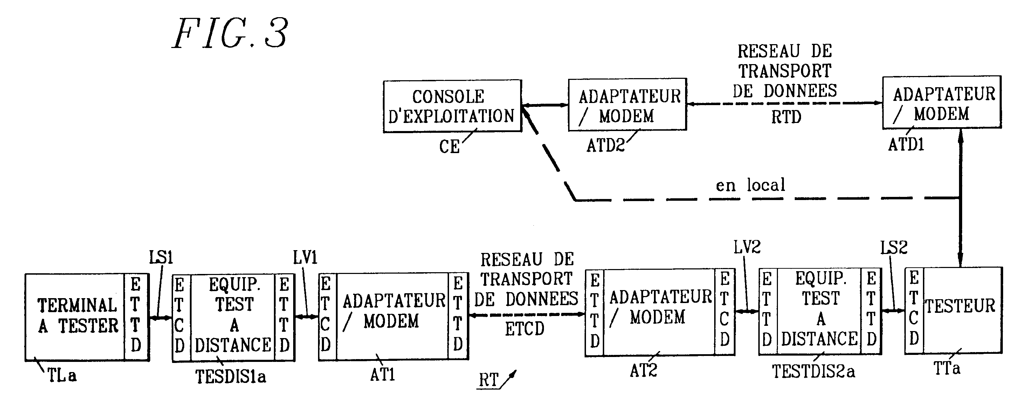

Selon une première variante du procédé de mise en oeuvre d'équipement TESDIS selon l'invention, un terminal TLa à tester comporte un équipement compatible RNIS du type "équipement terminal de traitement de données" ETTD, comme montré à la Fig.3.

Le terminal TLa est relié à un réseau de transport de données RT, à travers un premier équipement de test à distance TESDIS1a et un premier adaptateur de terminal AT1. Le premier module MS dans l'équipement TESDIS1a joue le rôle d'un ETCD relié au terminal TLa par une liaison multiplex LS1 constituant une interface physique S. Le second module MV dans l'équipement TESDIS1a joue le rôle d'un ETTD relié à un équipement ETCD dans l'adaptateur AT1 à travers une ligne LV1 constituant une interface V.24. Un autre équipement d'extrémité ETTD dans l'adaptateur AT1 communique avec le réseau de transport RT, lequel est équivalent à un ETCD.

Le terminal TLa, l'équipement TESDIS1a et l'adaptateur AT1 sont situés le long d'une ligne d'abonné. Par exemple, le terminal TLa est un prototype, est situé dans une entreprise de conception de terminaux et doit être testé par un testeur TTa éloigné du terminal TLa et situé dans des locaux spécialisés d'un service d'agrément de terminal de l'exploitant du réseau de transport.

Du côté du testeur TTa sont également prévus un second adaptateur AT2 et un équipement TESDIS2a. Le second module MV dans l'équipement TESDIS2a est, comme déjà dit pour tous les équipements TESDIS2a selon l'invention, équivalent à un ETTD. Par suite, la liaison de l'équipement TESDIS2a au réseau RT est symétrique de la liaison de l'équipement TESDIS1a au réseau RT, et donc un équipement d'extrémité ETTD dans l'adaptateur AT2a est relié au réseau RT, et un équipement d'extrémité ETCD dans l'adaptateur AT2 est relié au module MV de l'équipement TESDIS2a à travers une liaison LV2, constituant une interface V.24. Le premier module MS dans l'équipement TESDIS2a est relié à un équipement ETCD dans le testeur TTa par une ligne LSZ constituant une interface S.

Selon cette première variante, comme selon la seconde variante du procédé décrite ci-après, les termes "réseau de transport" RT désignent tout réseau de transmission de données transmettant de façon transparente de bout en bout, des données entre deux accès du réseau, constitués par les adaptateurs AT1 et AT2. Le réseau RT peut être un réseau numérique à intégration de services (RNIS) connu, et dans ce cas les adaptateurs AT1 et AT2 sont des adaptateurs numériques de terminal classiques adaptant l'interface V.24 aux caractéristiques du réseau RNIS. Toutefois, le réseau RT peut être le réseau téléphonique analogique, et les adapteurs AT1 et AT2 sont alors constitués par des modems.

Comme également montré à la Fig.3, une console d'exploitation CE est connectée au testeur TTa à travers une interface V.24 au niveau du testeur. La console permet de sélectionner à distance différentes séquences de test via le testeur TTa et d'analyser le résultat des tests du terminal TLa. Les séquences de test consistent essentiellement à tester les différentes phases du protocole de signalisation du canal D aux niveaux 2 et 3. L'initialisation des séquences est réalisée par des messages dans le canal D transmis par le terminal TLa ou le testeur TTa.

Selon une première variante montrée en traits pleins à la Fig.3, la console CE est déportée du point d'accès au réseau RT où est situé le testeur TTa, à travers un réseau de transport RTD qui peut être confondu avec le réseau RT, ou qui peut être un réseau indépendant du réseau RT. Le testeur TTa est alors relié à la console CE à travers un adaptateur de terminal ATD1, le réseau RTD et un autre adaptateur de terminal ATD2, les adaptateurs ATD1 et ATD2 pouvant être des modems lorsque le réseau RTD est analogique.

Selon une seconde variante montrée en traits interrompus courts à la Fig.3, la console d'exploitation CE est située localement à proximité du testeur TTa et est reliée directement par une ligne d'interface V.24.

Une communication pour des tests entre les équipements TESDIS1a et TESDIS2a est établie manuellement dans le premier équipement TESDIS1a du côté du terminal à tester TLa, à travers le réseau de transport RT. Le numéro d'appel du testeur TTa est préablement enregistré dans le premier adaptateur AT1, et l'initialisation de la communication est réalisée par le module MV de l'équipement TESDIS1a selon la procédure d'appel automatique en mode série de la recommandation V.25 bis du CCITT.

Simultanément à l'établissement de cette communication entre les équipements TESDIS1a et TESDIS2a, le module MS dans l'équipement TESDIS1a est activé au niveau physique 1 de l'interface S pour communiquer avec le terminal TLa via la ligne LS1. De même, dès que le second équipement de test à distance TESDIS2a est en communication avec l'équipement TESDIS1a suite à l'appel établi par ce dernier, le module MS de l'équipement TESDIS2a est activé au niveau 1 de l'interface S pour communiquer avec le testeur TTa via la ligne LS2. Ces liaisons demeurent actives pendant toute la durée des tests.

Pour cette première variante où le terminal à tester TLa est équivalent à un ETTD, le module MS du type ETCD dans l'équipement TESDIS1a fournit la téléalimentation au terminal, assure la procédure d'activation/désactivation du niveau physique 1 de l'interface S, transmet l'élément binaire "Echo" de la trame 2B + D, et participe à la gestion de la composition des trames vers le réseau RT .Comme déjà dit, au niveau liaison 2 du protocole de canal D, le module MV de l'équipement TESDIS1a gère l'insertion et la désinsertion des fanions dans la liaison synchrone LS1, calcule et vérifie le code de redondance cyclique CRC, et filtre les informations correctes et utiles pour les tests de niveau 2.

Du côté du testeur TTa, le module MS du type ETTD dans l'équipement TESDIS2a reçoit et exploite la téléalimentation fournie par le testeur, est esclave du testeur pour la procédure d'activation/désactivation du niveau physique 1 de l'interface S, exploite le retour de l'élément binaire "Echo" transmis par le testeur, et participe à la gestion de la composition des trames vers le réseau RT. Au niveau liaison 2 du protocole du canal D, le module MV de l'équipement TESDIS2a assure des fonctions analogues à celles du module MV/ETTD dans l'équipement TESDIS1a.

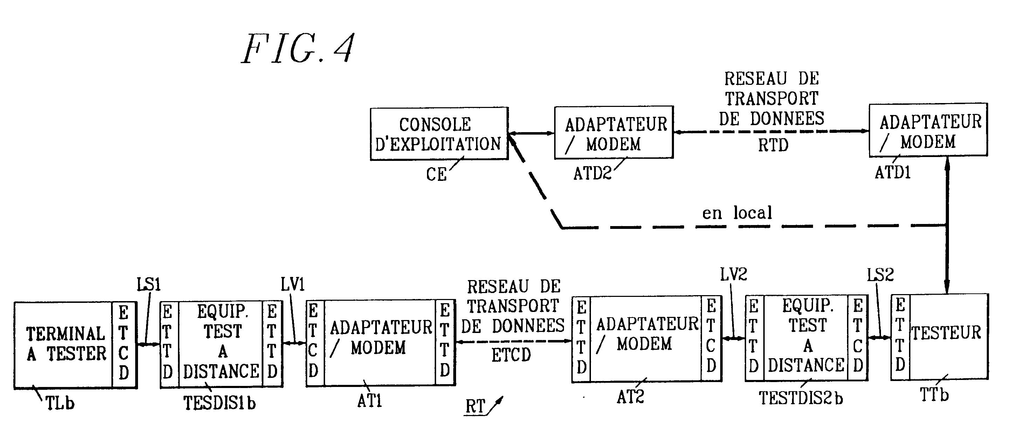

Comme illustré à la Fig.4, selon une seconde variante du procédé de mise en oeuvre d'équipements TESDIS selon l'invention, un terminal TLb à tester comporte un équipement compatible RNIS du type équipement de terminaison de circuit de données ETCD. Dans ce cas, le terminal TLb est relié au module MV, équivalent à un ETTD, d'un premier équipement de test à distance TESDIS1b via la ligne LS1. Le terminal TLb est alors testé par un testeur TTb offrant un équipement d'extrémité du type ETTD qui est relié au module MV, équivalent à un ETCD, d'un second équipement de test à distance TESDIS2b via la ligne LS2.

Dans la Fig.4, on retrouve une liaison bidirectionnelle entre les modules MV de type ETTD dans les équipements TESDIS1b et TESDIS2b analogue à celle déjà commentée entre les équipements TESDIS1a et TESDIS2a en référence à la Fig.3, à savoir une liaison à travers l'adaptateur AT1, le réseau de transport RT et l'adaptateur AT2. De même que selon la première variante, le testeur TTb est relié à la console d'exploitation CE soit à travers l'adaptateur ATD1, le réseau RTD et l'adaptateur ATD2, soit directement par une ligne d'interface V.24.

L'établissement d'une communication pour des tests entre les équipements TESDIS1b et TESDIS2b est identique à celle décrite précédemment entre les équipements TESDIS1a et TESDIS2a.

Les fonctionnements du module MS du type ETTD dans l'équipement TESDIS1b et du module MS du type ETCD dans l'équipement TESDIS2b selon cette seconde variante sont respectivement analogues à ceux des modules MS dans les équipements TESDIS2a et TESDIS1a selon la première variante.

Enfin, on notera qu'un équipement TESDIS selon l'invention au lieu d'être relié par une simple liaison LS à interface S à un terminal à tester ou à un testeur, peut être relié par une liaison à interface T à une régie numérique ou un petit réseau local, qui dessert quelques terminaux dont certains sont à tester, par l'intermédiaire d'une ou plusieurs liaisons à interface S. Il est rappelé que l'interface T est fonctionnellement identique à l'interface S au niveau de la structure de trame et des protocoles de niveau liaison et de niveau réseau et qu'elle en différe par son caractère point-à-point alors que l'interface S est constitué en bus distribué passif.

## Revendications

1. Equipement bidirectionnel (TESDIS) interconnectant une ligne numérique multiplex bidirectionnelle (LS) convoyant au moins un canal de données (B) et un canal de signalisation (D) et une ligne numérique bidirectionnelle de trames de données synchrones (LV) ayant un débit prédéterminé (DV) différent du débit (DD) du canal de signalisation, comprenant :
- des premiers moyens (MS) pour extraire un canal de signalisation (D) entrant par la ligne multiplex (LS),
- des premiers moyens d'adaptation de débit (MAD) pour changer un débit de bits du canal de signalisation entrant (D) en ledit débit (DV) de la ligne de données (LV), et
- des seconds moyens d'adaptation de débit (MADa) pour changer le débit de bits dans les trames entrantes en ledit débit (DD) du canal de signalisation (D),
caractérisé
en ce que les premiers moyens pour extraire (MS) extraient des bits utiles prédéterminés du canal de signalisation (D) extrait, et
en ce que l'équipement comprend, en outre,
- des premiers moyens (MV) pour insérer les bits utiles du canal de signalisation (D) transmis par les premiers moyens d'adaptation (MAD), dans le champ d'information de trames sortantes dans la ligne de données (LV),
- des seconds moyens (MV) recevant des trames entrantes par la ligne de données (LV) pour extraire de leur champ d'information, les bits utiles au débit (DV) de la ligne de données à destination du canal de signalisation sortant (D) de la ligne multiplex (LS), et
- des seconds moyens (MS) pour insérer les bits utiles transmis par les seconds moyens d'adaptation (MADa), dans des trames transmises dans le canal de signalisation sortant (D) de la ligne multiplex (LS).

2. Equipement conforme à la revendication 1, caractérisé en ce que les premiers, respectivement seconds moyens d'adaptation de débit (MAD;MADa) comprennent :
- une mémoire tampon (1; 1a) mémorisant des bits utiles extraits du canal de signalisation entrant (D), respectivement extraits du champ d'information des trames entrantes de la ligne de données (LV),
- des moyens (2, 3; 2a, 3a) pour lire les bits utiles extraits dans les premiers, respectivement seconds moyens pour extraire (MS;MV) et les écrire dans la mémoire tampon (1; 1a) à un rythme dépendant du débit (DD; DV) du canal de signalisation (D), respectivement de la ligne de données (LV), en réponse à un signal de détection de bit (DO; DOa) produit par les premiers, respectivement seconds moyens pour extraire, et
- des moyens (4,5;4a, 5a) pour lire les bits utiles dans la mémoire tampon (1; 1a) et les écrire dans les premiers, respectivement seconds moyens pour insérer (MV;MS) à un rythme dépendant du débit (DV;DD) de la ligne de données (LV), respectivement du canal de signalisation (D), en réponse à un signal de disponibilité de transmission (IP; IPa) produit par les premiers, respectivement seconds moyens pour insérer (MV;MS).

3. Equipement conforme à la revendication 2, caractérisé en ce que les deux mémoires tampon (1;1a) dans les premiers et seconds moyens d'adaptation de débit (MAD;MADa) sont reliées à un unique bus bidirectionnel distribué de transmission de bits utiles parallèles (BU) aux premiers et seconds moyens pour extraire et insérer (MS,MV), et en ce que l'équipement comprend des moyens (CG) pour gérer les conflits d'accès au bus (BU) par les mémoires tampon et les moyens pour extraire et insérer.

4. Equipement conforme à la revendication 2 ou 3, caractérisé en ce que, lorsque le débit (DVS) dans la ligne de données (LV) est supérieur au débit (DD) du canal de signalisation (D), les premiers et seconds moyens d'adaptation de débit (MAD; MADa) comprennent des moyens (6; 6a) respectivement pour introduire et retirer périodiquement des bits de remplissage entre des bits utiles à écrire dans les mémoires tampons (1;1a).

5. Equipement conforme à la revendication 4, caractérisé en ce que les bits de remplissage à écrire dans la mémoire tampon (1) des premiers moyens d'adaptation sont des recopies de bits utiles écrits précédemment.

6. Equipement conforme à l'une quelconque des revendications 1 à 5, caractérisé en ce que les premiers moyens pour insérer et les seconds moyens pour extraire (MV) jouent le rôle d'un équipement terminal de traitement de données (ETTD) par rapport à la ligne de données de type HDLC (LV).

## Patentansprüche

1. Zweirichtungseinrichtung (TESDIS), die eine digitale Zweirichtungs-Multiplexleitung (LS), die mindestens einen Datenkanal (B) und einen Signalkanal (D) aufweist, mit einer digitalen Zweirichtungsleitung für synchrone Datenrahmen (LV) verbindet, welche eine vorbestimmte Übertragungsgeschwindigkeit (DV) hat, die zur Übertragungsgeschwindigkeit (DD) des Signalkanals unterschiedlich ist, umfassend:
- erste Mittel (MS) zum Extrahieren eines Signalkanals (D), der auf der Multiplexleitung (LS) ankommt,
- erste Mittel zur Anpassung der Übertragungsgeschwindigkeit (MAD), um eine Übertragungsgeschwindigkeit der Bits des ankommenden Signalkanals (D) in die genannte Übertragungsgeschwindigkeit (DV) der Datenleitung (LV) umzuwandeln, und
- zweite Mittel zur Anpassung der Übertragungsgeschwindigkeit (MADa), um die Übertragungsgeschwindigkeit der Bits in den ankommenden Rahmen in die genannte Übertragungsgeschwindigkeit (DD) des Signalkanals (D) umzuwandeln,
dadurch gekennzeichnet,
daß die ersten Mittel zum Extrahieren (MS) vorbestimmte Datenbits des extrahierten Signalkanals (D) extrahieren, und daß die Einrichtung ferner aufweist
- erste Mittel (MV) zum Einfügen der Datenbits des von den ersten Mitteln zur Anpassung (MAD) übertragenen Signalkanals (D) in das Informationsfeld von in die Datenleitung (LV) ausgehenden Rahmen,
- zweite Mittel (MV), welche die über die Datenleitung (LV) ankommenden Rahmen empfangen, um aus ihrem Informationsfeld die Datenbits mit der Übertragungsgeschwindigkeit (DV) der Datenleitung, die für den Signalkanal (D) bestimmt sind, der aus der Multiplexleitung (LS) ausgeht, zu extrahieren und
- zweite Mittel (MS) zum Einfügen der von den zweiten Mitteln zur Anpassung (MADa) übertragenen Datenbits in die Rahmen, die in den aus der Multiplexleitung (LS) ausgehenden Signalkanal (D) übertragen sind.

2. Einrichtung nach Anspruch 1, dadurch gekennzeichnet, daß die ersten beziehungweise zweiten Mittel (MAD; MADa) zur Anpassung der Übertragungsgeschwindigkeit aufweisen:
- einen Pufferspeicher (1; 1a) zum Speichern der Datenbits, die aus dem ankommenden Signalkanal (D) extrahiert wurden beziehungsweise aus dem Informationsfeld der aus der Datenleitung (LV) ankommenden Rahmen extrahiert wurden;
- Mittel (2, 3; 2a, 3a) zum Lesen der in den ersten beziehungsweise zweiten Mitteln zum Extrahieren (MS; MV) extrahierten Datenbits, und um diese mit einem Rhythmus in den Pufferspeicher (1; 1a) einzuschreiben, der von der Übertragungsgeschwindigkeit (DD; DV) des Signalkanals (D) beziehungweise der Datenleitung (LV) abhängig ist, als Reaktion auf ein von den ersten beziehungsweise zweiten Mitteln zum Extrahieren erzeugten Bitfeststellsignal (DO; DOa), und
- Mittel (4, 5; 4a, 5a) zum Lesen der Datenbits im Pufferspeicher (1; 1a) und zum Einschreiben dieser in die ersten beziehungsweise zweiten Mittel zum Einfügen (MV; MS) mit einem Rhythmus, der von der Übertragungsgeschwindigkeit (DV; DD) der Datenleitung (LV) beziehungsweise des Signalkanals (D) abhängt, als Reaktion auf ein von den ersten beziehungsweise zweiten Mitteln zum Einfügen (MV; MS) erzeugtes Übertragungsbereitschaftssignal (IP; IPa).

3. Einrichtung nach Anspruch 2, dadurch gekennzeichnet, daß die beiden Pufferspeicher (1; 1a) in den ersten und zweiten Mitteln zur Anpassung der Übertragungsgeschwindigkeit (MAD; MADa) mit einem einzigen verteilten Zweirichtungsbus zur Übertragung von Paralleldatenbits (BU) zu den ersten und zweiten Mitteln zum Extrahieren und Einfügen (MS, MV) verbunden sind, und daß die Einrichtung Mittel (CG) zum Verwalten der Zugriffskonflikte auf den Bus (BU) durch die Pufferspeicher und die Mittel zum Extrahieren und Einfügen aufweist.

4. Einrichtung nach Anspruch 2 oder 3, dadurch gekennzeichnet, daß die ersten und zweiten Mittel zur Anpassung der Übertragungsgeschwindigkeit (MAD; MADa), wenn die Übertragungsgeschwindigkeit (DVS) der Datenleitung (LV) größer als die Übertragungsgeschwindigkeit (DD) des Signalkanals (D) ist, jeweils Mittel (6; 6a) zum periodischen Einfügen und Entnehmen von Füllbits zwischen den Datenbits umfassen, die in die Pufferspeicher (1; 1a) geschrieben werden sollen.

5. Einrichtung nach Anspruch 4, dadurch gekennzeichnet, daß die in den Pufferspeicher (1) der ersten Mittel zur Anpassung zu schreibenden Füllbits Kopien der vorher geschriebenen Datenbits sind.

6. Einrichtung nach einem der Ansprüche 1 bis 5, dadurch gekennzeichnet, daß die ersten Mittel zum Einfügen und die zweiten Mittel zum Extrahieren (MV) in bezug auf die Datenleitung vom Typ HDLC (LV) die Aufgabe eines Terminals der Datenverarbeitung (ETTD) übernehmen.

## Claims

1. Two-way equipment (TESDIS) interconnecting a two-way multiplex digital line (LS) carrying at least one data channel (B) and one signalling channel (D) and a two-way synchronous data frame digital line (LV) having a predetermined speed (DV) different from the speed (DD) of the signalling channel, the equipment comprising:
first means (MS) for extracting an incoming signalling channel (D) on the multiplex line (LS),
first speed-adapting means (MAD) for changing a bit speed of the incoming signal channel (D) to the speed (DV) of the data line (LV), and
second speed-adapting means (MADa) for changing the bit speed in the incoming frames into the signalling channel speed (DD),
characterised
in that the first extracting means (MS) extract predetermined useful bits from the extracted signalling channel (D), and
in that the equipment also comprises:
first means (MV) for inserting the useful bits of the signalling channel (D) transmitted by the first adapting means (MAD) into the information field of outgoing frames in the data line (LV),
second means (MV) receiving incoming frames on the data line (LV) in order to extract from their information field the useful bits at the speed (DV) of the data line for the outgoing signalling channel (D) of the multiplex line (LS), and
second means (MS) for inserting the useful bits transmitted by the second adapting means (MADa) into frames transmitted in the outgoing signal channel (D) of the multiplex line (LS).

2. Equipment according to claim 1, characterised in that the first and second speed-adapting means (MAD, MADa) comprise respectively:
a buffer memory (1; 1a) storing useful bits extracted from the incoming signalling channel (D) and from the information field of the incoming frames of the data line (LV) respectively,
means (2, 3; 2a, 3a) for reading the extracted useful bits in the respective first and second extracting means (MS; MV) and for writing them into the buffer memory (1; 1a) at a rhythm depending upon the respective speed (DD; DV) of the signalling channel (D) and data line (LV) in response to a bit detection signal (DO; DOa) produced by the first and second extracting means respectively, and
means (4, 5; 4a, 5a) for reading the useful bits in the buffer store (1; 1a) and for writing them into the first and second inserting means respectively (MV; MS) at a rhythm dependent upon the respective speed (DV; DD) of the data line (LV) and signalling channel (D) in response to a transmission availability signal (IP; IPa) produced by the first and second inserting means (MV; MS) respectively.

3. Equipment according to claim 2, characterised in that the two buffer memories (1; 1a) in the first and second speed-adapting means (MAD; MADa) are connected to a single two-way distributed bus (BU) for transmitting useful bits and are in parallel with the first and second extracting and inserting means (MS, MV) and the equipment comprises means (CG) for managing bus access conflicts by the buffer memories and the extracting and inserting means.

4. Equipment according to claim 2 or 3, characterised in that when the speed (DVS) in the date line (LV) is higher than the speed (DO) in the signalling channel (D) the first and second speed-adapting means (MAD; MADa) comprise respective means (6; 6a) for periodically introducing and withdrawing dummy bits between useful bits required to be written into the buffer memories (1; 1a).

5. Equipment according to claim 4, characterised in that the dummy bits to be written into the buffer memory (1) of the first adapting means are transcriptions of useful bits written in previously.

6. Equipment according to any of claims 1 to 5, characterised in that the first inserting means and the second extracting means (MV) serve as data terminal equipment (ETTD) for the HDLC type data line (LV).
